# EUROPÄISCHE PATENTANMELDUNG

(11) **EP 0 894 605 A1**
(43) Veröffentlichungstag der Anmeldung: **03.02.1999**
(21) Anmeldenummer: 97113075.2
(22) Anmeldetag: 30.07.1997
(51) Int. Cl.: B29C 45/17

(54) **Spritzgiessmaschine**

(71) Anmelder: ENGEL MASCHINENBAU GESELLSCHAFT MBH, A-4311 Schwertberg (AT)
(72) Erfinder: Urbanek, Otto, 4020 Linz (AT)
(74) Vertreter: Torggler, Paul Norbert

(57) **Zusammenfassung**

Spritzgießmaschine mit einer auf dem Maschinenrahmen (1) feststehenden (5) und einer verfahrbaren Formaufspannplatte (6), wobei zur Erzeugung einer Schließkraft zwischen den von den Aufspannplatten (5,6) getragenen Formhälften (7,8) eine Einrichtung (13) vorgesehen ist, die sich einerseits an der Rückseite der verfahrbaren Formaufspannplatte (6), andererseits an einer Abstützplatte (4) abstützt und die Abstützplatte (4) auf dem Maschinenrahmen (1) verfahrbar und an diesem an wählbaren Positionen fixierbar ist.

## Beschreibung

Die Erfindung betrifft eine Spritzgießmaschine mit einer auf dem Maschinenrahmen feststehenden und einer verfahrbaren Formaufspannplatte, wobei zur Erzeugung einer Schließkraft zwischen den von den Aufspannplatten getragenen Formhälften eine Einrichtung vorgesehen ist, die sich einerseits an der Rückseite der verfahrbaren Formaufspannplatte, andererseits an einer Abstützplatte (Zylinderplatte) abstützt.

Bei bekannten derartigen Einrichtungen ist die Zylinderplatte ein Teil des feststehenden Maschinenrahmens. Der Abstand dieser Zylinderplatte von der feststehenden Formaufspannplatte ergibt sich aus der Länge der zur Aufbringung der Schließkraft dienenden Einrichtung und aus dem Öffnungsweg der Form. Das bedeutet, daß die Schließkraft auf einen Rahmen ausgeübt wird, welcher wesentlich länger ist als die geschlossene Form samt den die Formhälften tragenden Formaufspannplatten. Dies wird insbesondere dann zum Nachteil, wenn gemäß einem Vorschlag der Anmelderin (vgl. EP 0 311 133) die gesamte Schließkraft von einem C-förmigen Maschinenrahmen aufgenommen wird, dessen nach oben weisende Schenkel nicht durch Holme verbunden sind. Auch wenn die bei derartigen Rahmen auftretenden Verformungen kompensiert werden, indem man es der verfahrbaren Formhälfte ermöglicht, Verschwenkungen der unverschieblichen Formhälfte mitzumachen, oder indem beide Formaufspannplatten gelenkig gelagert werden, ist es sinnvoll, den C-Rahmen möglichst kurz zu machen. Nur so können Aufwölbungen des horizontalen Mittelsteges des Rahmens unter dem Einfluß der Schließkraft ohne erheblichen Aufwand gering gehalten werden.

Bei der Lösung des dargelegten Problems geht die Erfindung davon aus, daß die Schließkraft nur bei geschlossener Form aufgebracht wird. Es kommt daher darauf an, bei geschlossener Form den Abstand der Zylinderplatte von der feststehenden Formaufspannplatte bzw. deren Träger möglichst gering zu machen. In diesem Sinn ist erfindungsgemäß vorgesehen, daß die Abstützplatte auf dem Maschinenrahmen verfahrbar und an diesem an wählbaren Positionen fixierbar ist.

Konstruktive Einzelheiten der Erfindung werden anschließend anhand der Zeichnung erläutert. In dieser ist

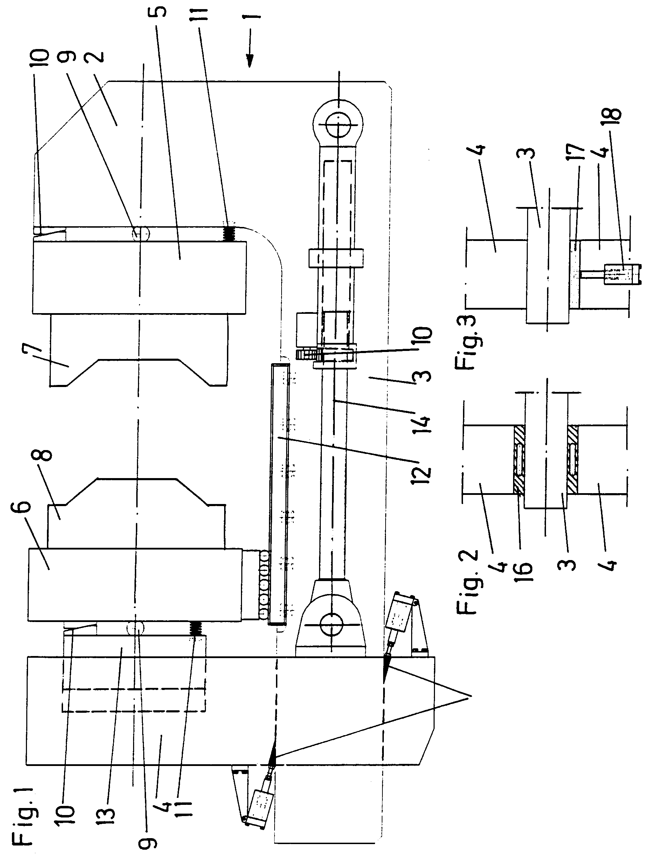

Fig. 1 eine schematische Seitenansicht einer erfindungsgemäßen Spritzgießeinrichtung, Fig. 2 und 3 zeigen Details der Verbindung der Abstützplatte mit dem Steg des Maschinenrahmens.

Die dargestellte Einrichtung weist einen feststehenden Rahmen 1 auf, dessen wesentliche Teile ein nach oben ragender Schenkel 2 und ein horizontaler Steg 3 sind. Auf dem Steg 3 ist eine Bahn 12 angeordnet, auf welcher eine Abstützplatte 4 verfahrbar ist, um die aus den Formhälften 7,8 bestehende Form zu öffnen und zu schließen. Diese als 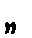 Eilhub" bezeichnete Bewegung könnte hydraulisch bewirkt werden. Im vorliegenden Fall ist hiefür ein Motor 18 vorgesehen, welcher auf die Spindel 14 einwirkt. Wenn die Form geschlossen ist, wird die Abstützplatte 4 mit dem Steg 3 verriegelt, was beispielsweise durch das Einfahren hydraulisch betätigter, schwenkbar angeordneter Keile 15 erfolgen kann. Anschließend wird durch ein Druckkissen 13 der Schließdruck aufgebracht.

Statt durch Keile 15 kann die Verriegelung der Abstützplatte 4 mit dem Steg 3 auch, wie in Fig. 2 dargestellt, durch eine aufweitbare Druckhülse 16, oder wie in Fig. 3 dargestellt, durch einen mittels einer Hydraulikeinheit 18 angepreßten Reibbelag 17 erfolgen.

Die Hauptanwendung der Erfindung liegt bei holmlosen Maschinen, da bei diesen keine Einrichtungen vorgesehen sind, um die Verschwenkung des Schenkels 3 bzw. der Abstützplatte 4 nach außen zu verhindern. Um diese Verschwenkung zu kompensieren, ist im vorliegenden Fall so wie in der US-PS5,249,951 vorgesehen, daß die die Formhälften 7,8 tragenden Formaufspannplatten 5,6 um Gelenke 9 mit horizontalen Schwenkachsen verschwenkbar sind. Diese Verschwenkung erfolgt gegen den Druck von Federn 11, deren Wirkung anderersetis durch Anschläge 10 begrenzt ist.

## Patentansprüche

1. Spritzgießmaschine mit einer auf dem Maschinenrahmen feststehenden und einer verfahrbaren Formaufspannplatte, wobei zur Erzeugung einer Schließkraft zwischen den von den Aufspannplatten getragenen Formhälften eine Einrichtung vorgesehen ist, die sich einerseits an der Rückseite der verfahrbaren Formaufspannplatte, andererseits an einer Abstützplatte (Zylinderplatte) abstützt, dadurch gekennzeichnet, daß die Abstützplatte (4) auf dem Maschinenrahmen (1) verfahrbar und an diesem an wählbaren Positionen fixierbar ist.

2. Spritzgießmaschine nach Anspruch 1, dadurch gekennzeichnet, daß zur Fixierung der Abstützplatte hydraulisch betätigbare Keile (15) vorgesehen sind, die zwischen dem Steg (3) des Maschinenrahmens und der Abstützplatte (4) einschiebbar sind.

3. Spritzgießmaschine nach Anspruch 1, dadurch gekennzeichnet, daß zwischen Abstützplatte (4) und Steg (3) eine hydraulisch aufweitbare Druckhülse (16) vorgesehen ist (Fig. 2).

4. Spritzgießmaschine nach Anspruch 1, dadurch gekennzeichnet, daß gegen den Steg (3) ein Reibbelag (17) durch eine in der Abstützplatte (4) angeordnete hydraulische Einrichtung (18) anpreßbar ist (Fig. 3).

5. Spritzgießmaschine nach einem der Ansprüche 1 bis 4, dadurch gekennzeichnet, daß die Schließkraft ausschließlich über die Abstützplatte (4) in den Maschinenrahmen (1) eingeleitet wird.

6. Spritzgießmaschine nach Anspruch 5, dadurch gekennzeichnet, daß die die Formhälften (7,8) tragenden Formaufspannplatten (5,6) mittels Gelenken (9) an einem feststehenden vertikalen Schenkel (2) des Maschinenrahmens (1) bzw. an der Abstützplatte (4) gelagert sind.
